(19) Europäisches Patentamt
European Patent Office
Office européen des brevets

(11) EP 0 815 160 B1

(12) **EUROPÄISCHE PATENTSCHRIFT**

(45) Veröffentlichungstag und Bekanntmachung des Hinweises auf die Patenterteilung:
**26.03.2008 Patentblatt 2008/13**

(21) Anmeldenummer: **96908072.0**

(22) Anmeldetag: **19.03.1996**

(51) Int Cl.:
***C08G 65/48*** *(2006.01)* ***H01M 10/40*** *(2006.01)*

(86) Internationale Anmeldenummer:
**PCT/EP1996/001177**

(87) Internationale Veröffentlichungsnummer:
**WO 1996/029360 (26.09.1996 Gazette 1996/43)**

# (54) SULFONIERTE POLYETHERKETONE, VERFAHREN ZU IHRER HERSTELLUNG UND VERWENDUNG ZUR HERSTELLUNG VON MEMBRANEN

SULPHONATED POLYETHER KETONES, METHOD OF PRODUCING THEM AND THE USE THEREOF TO PRODUCE MEMBRANES

CETONES POLYETHER SULFONEES, LEUR PROCEDE DE PRODUCTION ET LEUR UTILISATION POUR FABRIQUER DES MEMBRANES

(84) Benannte Vertragsstaaten:
**DE ES FR GB IT SE**

(30) Priorität: **20.03.1995 DE 19510026**
**07.12.1995 DE 19545642**
**22.12.1995 DE 19548423**
**18.03.1996 DE 19610303**

(43) Veröffentlichungstag der Anmeldung:
**07.01.1998 Patentblatt 1998/02**

(73) Patentinhaber: **BASF Fuel Cell GmbH**
**65926 Frankfurt am Main (DE)**

(72) Erfinder:
- **CLAUSS, Joachim**
**D-65929 Frankfurt am Main (DE)**
- **DECKERS, Gregor**
**D-65929 Frankfurt am Main (DE)**
- **SCHNELLER, Arnold**
**D-64409 Messel (DE)**
- **WITTELER, Helmut**
**D-65929 Frankfurt am Main (DE)**

(74) Vertreter: **Luderschmidt, Schüler & Partner**
**Patentanwälte,**
**Industriepark Höchst,**
**Geb. F821**
**65926 Frankfurt am Main (DE)**

(56) Entgegenhaltungen:
**EP-A- 0 008 895** **EP-A- 0 041 780**
**EP-A- 0 575 807**

- **DATABASE WPI Derwent Publications Ltd., London, GB; AN 89-013709 XP002003196 & JP,A, 63 291 920 (SUMITOMO)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von sulfonierten aromatischen Polyetherketon als Polymerelektrolyte in Brennstoffzellen.

Sulfonierte Polyetherketone stellen Kationen-Ionenaustauscher dar. Sie sind nützlich als Membranmaterialien, z.B. zur Ultrafiltration, zur Entsalzung und zur Entfernung von Mikroorganismen, da sie in vielen Fällen auch in Gegenwart von Wasser mechanisch beständig sind. Sulfonierte Polyetherketone sind protonen- und kationenleitende Materialien, die nützlich sind zur Elektrodialyse oder als Bestandteil von elektrochemischen Zellen.

Ausgangsmaterialien sind aromatische Polyetherketone wie in der allgemeinen Formel (I) angegeben,

$$[[Ar\text{-}O\text{-}]_q\text{-}Ar\text{-}[[CO\text{-}Ar'\text{-}]_r\text{-}O\text{-}Ar]_s\text{-}[CO\text{-}Ar'\text{-}]_t\text{-}[O\text{-}Ar\text{-}]_u\text{-}CO\text{-}] \qquad (I)$$

wobei

| | |
|---|---|
| Ar | einen Phenylenring mit p- und/oder m-Bindungen, |
| Ar' | eine Phenylen-, Naphthylen-, Biphenylen-, Anthrylen- oder eine andere zweiwertige aromatische Einheit, |
| r, u und s | unabhängig voneinander 0 oder 1, |

| | |
|---|---|
| t | 0,1,2 oder 3, |
| q | 1,2,3 oder 4 |

bedeuten. Das Polymere mit q=1, r=0, s=1, t=0, u=0 ist unter der Bezeichnung Victrex ® im Handel verfügbar. Ebenso wird das Polymere mit q=1, r=0, s=0, t=0 und u=0 von der Firma Victrex hergestell. Ferner ist das Polymere mit q=1, r=0, s=0, t=2, u=1 und Ar 1,4-Phenylen unter der Bezeichnung Ultrapek ® im Handel verfügbar.

Polyetherketone sind leicht zugänglich. Sie lassen sich prinzipiell durch eine elektrophile Polykondensation nach Friedel-Crafts aufbauen, wobei ein entsprechendes aromatisches Bissäuredihalogenid mit einem aromatischen Ether umgesetzt wird. Diese Möglichkeit ist z.B. in US-3 065 205, GB-971 227, US-3 441 538, GB-1 387 303, WO 84-03 891 und in dem Aufsatz von Iwakura, Y., Uno, K. und Tahiguchi, T.J., Polym. Sci., Pat. A-1, 6, 3345 (1968), dargestellt. Daneben kann man die Etherketone durch nucleophile aromatische Substitution gewinnen. Hierzu wird ein entsprechendes aromatisches Bisdiol mit einem aromatischen Bishalogenketon umgesetzt, wie es z.B. in:R.A., Clendinning, A.G. Farnham, W.F. Hall, R.N. Johnson and C.N. Merriam, J. Polym. Sci. A1, 5, 2375, (1967), GB-1 177 183, GB-1 141 421, EP-0 001 879, US 4 108 837, US 4 175 175, T.E. Attwood, A.B. Newton, J.B. Rose, Br. Polym. Journ., 4, 391, (1972); T.E. Attwood, P.C. Dawson, J.L. Freemann, L.R.J. Hoy, J.B. Rose, P.A. Staniland, Polymer, 22, 1096, (1981) beschrieben wird.

Die Herstellung von sulfonierten Polyetherketonen aus einigen dieser Polyetherketone wird beschrieben in EP-A-008 895, EP-A-041 780 und EP-A-575 807.

Gemäß EP-A- 008 895 wird das zu sulfonierende Polymer bei Raumtemperatur in Schwefelsäure von 98 Gew.-% suspendiert. Der Löseprozeß und die Sulfonierung laufen gleichzeitig ab, wobei allmählich eine sehr viskose Lösung erhalten wird. Diese Lösung wird entweder sich selbst überlassen oder bei gleicher Temperatur mit Schwefelsäure gleicher Konzentration verdünnt. Die Reaktion verläuft sehr langsam. Nach 10 Wochen waren erst ca. 90 % der sulfonierbaren Phenylen-Einheiten sulfoniert. In den eingesetzten Polyetherketonen betrug das Zahlenverhältnis von Etherbrücken zu CO-Brücken etwa 2:1. Gemäß EP-A-008 895 werden unter diesen Bedingungen nur O-Phenylen-O-Einheiten sulfoniert.

Nach dem Verfahren gemäß EP-A- 041 780 werden bei erhöhter Temperatur aromatische Polyetherketone, die Copolymere darstellen, sulfoniert. Nur ein Teil der Monomereinheiten (A) ist der Sulfonierung zugänglich, während andere Monomereinheiten (B) nicht sulfoniert werden. Durch das Verhältnis A/B läßt sich so der Sulfonierungsgrad steuern. Jedoch bleiben auch hier die Reaktionsbedingungen während des Löseprozesses und danach unverändert. Entsprechende Homopolymere (A) würden unter den angegebenen Bedingungen zu hoch sulfoniert sein und damit zu wasserlöslichen Verbindungen führen. Da hier die Sulfonierung bereits während des Auflöseprozesses des Polymeren stattfindet, ist es schwierig, den Sulfonierungsgrad zu kontrollieren und niedrig sulfonierte Produkte zu erhalten. Bei dem Verfahren gemäß EP-A-041 780 werden unter diesen Bedingungen ebenfalls nur O-Phenylen-O-Einheiten sulfoniert.

Bei dem in EP-A-575 807 offenbarten Verfahren wird das zu sulfonierende Polymer bei Raumtemperatur in Schwefelsäure von 94 bis 97 Gew.-% suspendiert. Der Löseprozeß und eine teilweise Sulfonierung des Polymers laufen gleichzeitig ab, wobei allmählich eine viskose Lösung erhalten wird. Die Lösung wird mit einem sulfonierenden Agens versetzt bis die Schwefelsäurekonzentration 98 bis 99,9 Gew.-% beträgt. Die Lösung verbleibt bis der gewünschte Sulfonierungsgrad erreicht ist und wird dann aufgearbeitet. Unter diesen Bedingungen werden nur O-Phenylen-O-Einheiten sulfoniert, während O-Phenylen-CO-Einheiten nicht angegriffen werden. Dies wird auch von Daoust et al. (Polymer, Vol. 35 (25), 5491-5497 (1994)) bestätigt, wobei der Sulfonierungsprozeß beschränkt ist auf eine Sulfonsäuregruppe pro Wiederholungseinheit und auf eine der vier äquivalenten Positionen des von zwei Ethereinheiten umgebenen Phenylenrings. Die anderen beiden Phenylenringe werden nach Daoust von der benachbarten Ketoneinheit so stark desaktiviert, daß hier keine Sulfonierung stattfindet.

Bei der Sulfonierung von Polyetherketonen unter Verwendung von Chlorsulfonsäure oder einem $SO_3$/Triethylphosphat-Komplex wird ein hoher Grad an Vernetzung sowie Zersetzung der Polymerhauptkette beobachtet (Marvel et al., Journal of Polymer Science, Polymer Chem. Edition, vol. 23, 2205-2223, (1985) und Bishop et al., Macromolecules, vol. 18, 86-93 (1985)).

Bei den im Stand der Technik bekannten Verfahren werden von den eingesetzten Polyetherketonen nur O-Phenylen-O-Einheiten sulfoniert, während O-Phenylen-CO-Einheiten und CO-Phenylen-CO-Einheiten nicht oder nur zu einem verschwindend geringen Anteil sulfoniert werden oder bei Anwendung drastischerer Bedingungen erfolgt Vernetzung oder eine Zerstörung der Polymerhauptkette. Polymere, die keine O-Phenylen-O-Einheiten aufweisen, lassen sich nicht in signifikantem Umfang sulfonieren. Die bei Anwendung härterer Reaktionsbedingungen erhaltenen Produkte sind in den herkömmlichen Lösemitteln unlöslich und können daher über Lösung nicht oder nur sehr schwer weiterverarbeitet werden.

Nach dem Stand der Technik war nicht zu erwarten, daß sich O-Phenylen-CO-Einheiten in einem Polyetherketon sulfonieren lassen. Ebenfalls war nach dem Stand der Technik nicht zu erwarten, daß sich entsprechend sulfonierte Produkte in herkömmlichen Lösemitteln lösen lassen. Nach dem Stand der Technik galt es als unmöglich, schonend in einem Polyetherketon Phenylenringe zu sulfonieren, die einer Ketogruppe direkt benachbart sind, wenn nicht gleichzeitig Vernetzung oder Abbau der Polymerhauptkette eintritt.

Die Aufgabe der vorliegenden Erfindung ist es somit, ein schonendes und kontrollierbares Verfahren zur Sulfonierung von Polyetherketonen der allgemeinen Formel (I) bereitzustellen, wobei sich mit diesem Verfahren neben O-Phenylen-O-Einheiten auch O-Phenylen-CO-Einheiten sulfonieren lassen und auf diese Weise neue sulfonierte Polyetherketone zu gewinnen. Weitere Aufgabe ist es, Lösungen dieser Polymere herzustellen.

Überraschenderweise wurde nun gefunden, daß sich erfindungsgemäße Polymere gut und kontrollierbar neben den O-Phenylen-O-Einheiten auch an O-Phenylen-CO-Einheiten sulfonieren lassen, wobei die erhaltenen Produkte ab einem gewissen Sulfonierungsgrad sogar löslich sind. Sogar Polymere, die nur O-Phenylen-CO-Einheiten enthalten, sind einer gezielten Sufonierung zugänglich.

Die vorliegende Erfindung betrifft daher die Verwendung eines sulfonierten aromatischen Polyetherketons gemäß Anspruch 1 sowie den abhängigen Ansprüchen 2 bis 6.

Aromatische Polyetherketone mit Einheiten der allgemeinen Formel (I) können auch an den O-Phenylen-CO-Einheiten sulfoniert werden.

In Übereinstimmung mit der veröffentlichten Literatur wird gefunden, daß die Sulfonierung bevorzugt an den O-Phenylen-O-Einheiten der Polyetherketone stattfindet. Überraschenderweise wurde gefunden, daß bei höheren Sulfonierungsgraden auch ein signifikanter Anteil der O-Phenylen-CO-Einheiten sulfoniert wird.

Das Verfahren ist dadurch gekennzeichnet, daß man das aromatische Polyetherketon in Schwefelsäure von 94 bis 98 Gew.-% löst, man die erhaltenen Lösung mit einem sulfonierenden Agens versetzt, bis die Schwefelsäurekonzentration 98 bis 100 Gew.-% oder bis die Oleumkonzentration 0,01 bis 15 Gew.-% $SO_3$ beträgt, man eine geeignete Reaktionstemperatur einstellt und man den Reaktionsansatz aufarbeitet, sobald der gewünschte Sulfonierungsgrad erreicht ist.

Vorzugsweise wird das aromatische Polyetherketon in Schwefelsäure unter schonenden Bedingungen gelöst, d.h. unter Bedingungen, bei denen eine Sulfonierung weitgehend unterdrückt wird, bzw. es noch nicht zu einer Sulfonierung kommt. Vorzugsweise beträgt die Konzentration der zum Auflösen verwendeten Schwefelsäure 94 bis 97 Gew.-%. Die Lösetemperatur wird so niedrig wie möglich gewählt, um ein Einsetzen der Sulfonierungsreaktion in diesem Stadium weitgehend zu vermeiden. Im allgemeinen liegt die Lösetemperatur zwischen 10 und 80°C, insbesondere zwischen 20 und 70°C, vorzugsweise zwischen 30 und 60°C.

Das beschriebene Sulfonierungsverfahren erlaubt unter kontrollierten Bedingungen die Sulfonierung von Polyetherketonen auch an O-Phenylen-CO-Einheiten.

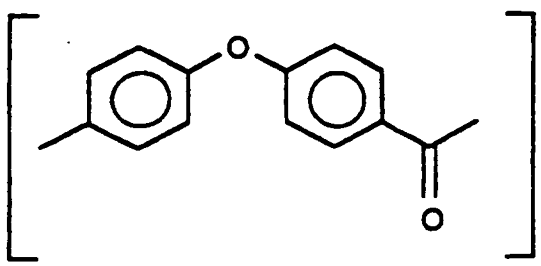

(V)

In einer weiteren bevorzugten Ausführungsform ist das zu sulfonierende Polyetherketon ein Copolymer enthaltend mindestens zwei verschiedenen Einheiten der Formeln (V) und (VI).

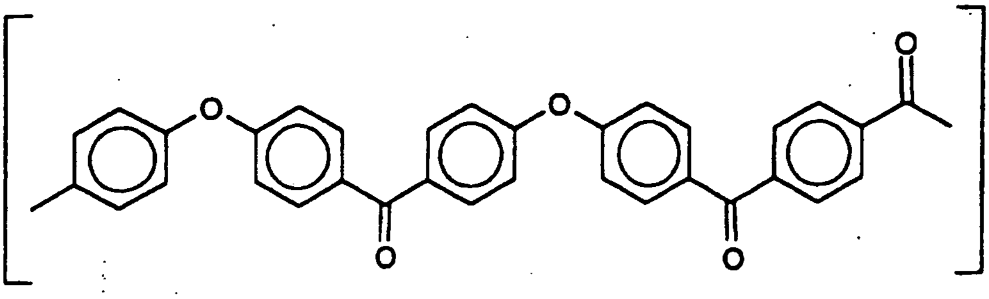

(VI)

Für das Homopolymer der Formel (V) wird z.B. nach einem Lösevorgang bei maximal 80°C und nach 24 h bei Raumtemperatur in Schwefelsäure von 95 oder 97Gew.-% ein Sulfonierungsgrad von 12 mol-% bezogen auf eine Wiederholungseinheit beobachtet. Die Sulfonierungstemperatur liegt vorzugsweise im Bereich von 50 bis 100°C

Bevorzugt sind Lösebedingungen, die zu einem Sulfonierungsgrad von maximal 35 mol-% bezogen auf eine Wiederholeinheit führen. Während des Lösevorgangs ist eine Sulfonierung der Hauptkette weitgehend unterdrückt. Untersuchungen haben gezeigt, daß während des Lösevorgangs kein Abbau eintritt.

Als sulfonierendes Agens, das zur Erhöhung der Schwefelsäure-Konzentration und zur Sulfonierung dient, werden vorzugsweise Schwefelsäure, rauchende Schwefelsäure, Oleum, Chlorsulfonsäure und Schwefeltrioxid eingesetzt.

In Abhängigkeit von dem Verhältnis der O-Phenylen-O-Einheiten zu den O-Phenylen-CO-Einheiten zu den CO-Phenylen-CO-Einheiten und in Abhängigkeit von der Abfolge dieser Einheiten entlang der Polymerhauptkette ändert sich das Sulfonierungsverhalten der Polyetherketone. Änderungen im Elektronenhaushalt der Phenylenringe beeinflussen direkt deren Sulfonierungsverhalten. Aber auch Nebenreaktionen werden durch Änderungen im Elektronenhaushalt der Phenylenringe beeinflußt: Die Kombination der Reaktionsparameter, der Schwefelsäurekonzentration, der Reaktionstemperatur und der Reaktionsdauer, bestimmt in welchem Maße O-Phenylen-O-Einheiten und O-Phenylen-CO-Einheiten sulfoniert werden und in welchem Maß Vernetzung über Sulfongruppen oder Hauptkettenabbau auftreten.

Für jedes Polyetherketon sind daher andere Kombinationen der Reaktionsparameter ideal, um einerseits einen hohen Anteil an sulfonierten O-Phenylen-CO-Einheiten zu erhalten und um andererseits Vernetzungsreaktionen und Kettenabbau auf einem möglichst geringen Niveau zu halten. Das erfindungsgemäße Verfahren zeichnet sich dadurch aus, daß man die geeignete Parameterkombination auswählt, um in diesem Sinne einen möglichst günstigen Verlauf der Sulfonierungsreaktion zu gewährleisten.

Im allgemeinen gilt, daß elektronenreiche aromatische Strukturen bevorzugt sulfoniert werden. Sind verschiedene Reaktionsorte für die Sulfonierung vorhanden, d.h. weist das Eduktpolymer verschiedene aromatische Strukturen mit unterschiedlichen Elektronendichten auf, so hängt die Selektivität des Reaktionsortes unter anderem von den jeweiligen Reaktionsparametern (Zeit, Temperatur, Säurekonzentration) ab.

Um einen bevorzugten Sulfonierungsgrad in O-Phenylen-CO-Einheiten zu erreichen, sind je nach Struktur des Eduktpolymers verschiedene Selektivitäten erwünscht. Daher sind abhängig von der Struktur des Eduktpolymers unterschiedliche Kombinationen an Reaktionsparametern besonders bevorzugt.

Die Polyetherketone werden dazu entsprechend des Elektronenreichtums ihrer aromatischen Strukturen unterteilt.

O-Phenylen-O-Einheiten sind elektronenreicher und daher leichter zu sulfonieren als O-Phenylen-CO-Einheiten, während O-Phenylen-CO-Einheiten wiederum leichter sulfonierbar sind als CO-Phenylen-CO-Einheiten.

Als Maß für die Sulfonierbarkeit (S) eines Polyetherketons gilt:

$$S = 4\ EE + EK - KK$$

wobei

S= Maßzahl für die Sulfonierbarkeit
EE= prozentualer Anteil der O-Phenylen-O-Einheiten
EK= prozentualer Anteil der O-Phenylen-CO-Einheiten

KK= prozentualer Anteil der CO-Phenylen-CO-Einheiten an den aromatischen Strukturen im Polymer.

Damit gilt:

$$EE + EK + KK = 100\%$$

Für die Auswahl der bevorzugten Kombinationen von Reaktionsparametern muß ebenfalls das Verhältnis V berücksichtigt werden:

$$V = EK / EE$$

Allgemein kann man davon ausgehen, daß

1. je höher V ist, desto drastischere Reaktionsbedingungen sind notwendig, um einen hohen Anteil an sulfonierten O-Phenylen-CO-Einheiten zu erhalten;
2. je geringer die Sulfonierbarkeit S, desto längere Zeiten und/oder härtere Reaktionsbedingungen sind notwendig, um den gewünschten Sulfonierungsgrad zu erzielen;
3. je härter die Reaktionsbedingungen und je länger die Reaktionszeiten, desto mehr Nebenreaktionen treten auf.

Unterteilt man die zu sulfonierenden Polymere nach dem oben aufgeführten Schema, so ergibt sich folgende Einteilung: Polymere mit S > 150 % gelten als leicht sulfonierbar, Polymere mit 150% > S > 80% sind mäßig sulfonierbar und Polymere mit S < 80% werden als schwer sulfonierbar eingestuft.

Berücksichtigt man diese Punkte, so zeigt sich, daß bestimmte Kombinationen an Reaktionsparametern besonders geeignet sind, die gewünschten Sulfonierungsprodukte herzustellen. Andere Kombinationen führen nicht zu den gewünschten Produkten. Die Beispiele in den Tabellen verdeutlichen diese Abhängigkeit.

Betrachtet man beispielsweise ein mäßig sulfonierbares Polyetherketon der Formel (III)

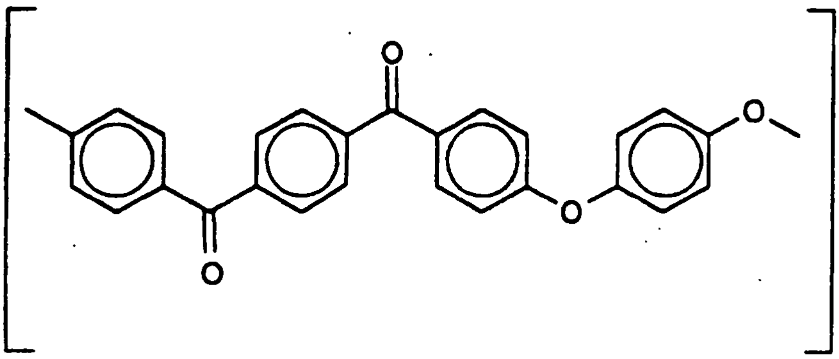

(III)

(Tabelle 1), so zeigt sich, daß der Anteil der sulfonierten O-Phenylen-CO-Einheiten bei gleichbleibender Temperatur mit zunehmender Reaktionszeit zunimmt. Hierbei ist es möglich, die Temperatur so einzustellen, daß die Sulfonierung von O-Phenylen-CO-Einheiten in einstellbaren Zeiträumen erfolgt und gleichzeitig eventuelle unerwünschte Nebenreaktionen weitgehend ausgeschlossen werden. Unterhalb einer gewissen Temperaturschwelle (60°C) beobachtet man jedoch auch bei längeren Reaktionszeiten keine oder nur eine minimale Sulfonierung der Ether-Keton-Einheiten.

Das gleiche gilt für die Reaktionskonzentration der Schwefelsäure. So wird bei einer Schwefelsäurekonzentration von ≤90 Gew.%, auch bei entsprechend langen Reaktionszeiten, keine Sulfonierung der O-Phenylen-CO-Einheiten beobachtet.

Bei einer Säurekonzentration von >90 ≤99 Gew.% beobachtet man dagegen schon bei mäßigen Temperaturen und kurzen Reaktionszeiten eine merkliche Sulfonierung, die mit zunehmender Reaktionszeit, unter Beibehaltung der Temperatur, noch gesteigert werden kann.

Durch eine geeignete Kombination der Reaktionsparameter gelangt man unter milden Bedingungen zu Polymeren mit einer hohen Sulfonierung der Ether-Keton-Einheiten (1 bis 50 %), wobei störende Nebenreaktion weitgehend

unterdrückt werden. Durch eine geeignete Kombination der Reaktionsparameter gelangt man unter härteren Bedingungen zu Polymeren mit einer hohen Sulfonierung der Ether-Keton-Einheiten (1 bis 100 %).

Bei der Herstellung der sulfonierten Polymere wird die Konzentration der Schwefelsäure nach dem Lösevorgang, z.B. durch Zugabe von Oleum, erhöht bis die Schwefelsäurekonzentration 98 bis 100 Gew.-% oder bis die Oleumkonzentration 0,01 bis 15 Gew.-% $SO_3$ beträgt, insbesondere bis die Schwefelsäurekonzentration 98,5 bis 100 Gew.-% oder bis die Oleumkonzentration 0,01 bis 5 Gew.-% $SO_3$ beträgt, vorzugsweise bis die Schwefelsäurekonzentration 98,5 bis 100 Gew.-% oder bis die Oleumkonzentration 0,01 bis 1 Gew.-% $SO_3$ beträgt.

Die Reaktionstemperatur bei der eigentlichen Sulfonierung kann höher oder auch niedriger liegen als beim Löseprozeß. Im allgemeinen sulfoniert man bei Temperaturen im Bereich von 10 bis 100°C, insbesondere 30 bis 95°C, besonders bevorzugt 50 bis 90°C. Sowohl eine Temperaturerhöhung als auch eine Verlängerung der Reaktionszeit bewirken eine Erhöhung des Sulfonierungsgrads des Polymers. Insbesondere beträgt die Temperatur der Lösung nach Zugabe des sulfonierenden Agens mindestens 30°C. Typische Reaktionszeiten liegen im Bereich von 45 Minuten bis 24 Stunden, vorzugsweise 1 und 8 Stunden, besonders bevorzugt im Bereich von 1 bis 4 Stunden. Sobald der gewünschte Sulfonierungsgrad erreicht ist, wird die Reaktion abgebrochen und das Polymer z.B. im wäßrigen Milieu ausgefällt, isoliert und getrocknet.

Untersuchungen haben gezeigt, daß während der Sulfonierungsreaktion nur in geringem Maße ein Abbau der Polymerhauptkette eintritt. Gegebenenfalls vorhandene CO-Phenylen-CO-Einheiten des eingesetzten aromatischen Polyetherketons werden nach dem erfindungsgemäßen Verfahren nicht sulfoniert.

Der Vorteil der sulfonierten O-Phenylen-CO-Einheiten im Vergleich zu sulfonierten O-Phenylen-O-Einheiten in herkömmlichen Polymeren liegt unter anderem in der besseren hydrolytischen Stabilität der $SO_3H$- bzw. der $SO_3M$-Gruppen. In wäßriger Umgebung und bei erhöhten Temperaturen kann Desulfonierung der sulfonierten Polyetherketone auftreten. Es ist bekannt, daß das Maß der hydrolytischen Desulfonierung von dem Elektronenreichtum der aromatischen Ringe abhängt.

Beim Einsatz von sulfonierten Polymeren im wäßrigen Medium ist es unabdingbar, daß die Eigenschaften des sulfonierten Polymers konstant bleiben. Bei solchen Anwendungen ist es daher vorteilhaft ein sulfoniertes Polyetherketon zu verwenden, das Desulfonierung nicht oder nur zu einem geringem Umfang zuläßt. Ein Polymer, dessen Sulfonsäuregruppen zu einem möglichst hohem Grade an O-Phenylen-CO-Einheiten lokalisiert sind, ist demnach in solchen Fällen insbesondere geeignet. Die Sulfonsäuregruppen ($SO_3H$) können nach der Sulfonierung mit den bekannten Verfahren in ihre Salzform ($SO_3M$) überführt werden.

Das beschriebene Verfahren ergibt Sulfonierungsprodukte, die sich ab einem bestimmten Sulfonierungsgrad in herkömmlichen Lösemitteln, wie z.B. NMP oder DMSO, lösen lassen.

Je nach weiterem Verwendungszweck der Polymerelektrolytlösung kann diese gegebenenfalls ein weiteres unsulfoniertes Polymer oder auch geringe Anteile von Hilfsstoffen enthalten.

Die Polymerelektrolytlösungen eignen sich insbesondere zur Herstellung von asymmetrischen Membranen, zum Beispiel für die Nano-, Ultra- oder Mikrofiltration sowie zur Herstellung von dichten Filmen mit einer Dicke im Bereich von 5 $\mu$m bis 1 mm.

Eine besonders wichtige Rolle kommt den Polymerelektrolytlösungen bei der Herstellung eines besonders intensiven Kontaktes zwischen zwei Polymerelektrolytoberflächen zu. Eine poröse oder rauhe Oberfläche kann so z.B. nach Kontaktieren der Lösung mit einem Fällungsmittel erzielt werden.

Die Polymere sowie Polymerelektrolytlösungen oder Polymerfilme enthaltend diese Polymere eignen sich insbesondere zur Verwendung in elektrochemischen Zellen, beispielsweise Brennstoffzellen oder Wasserelektrolysezellen.

Beispiele:

In einer Vierhals-Rührapparatur mit Tropftrichter und Ölbad wurde 96%ige konzentrierte Schwefelsäure vorgelegt und verschiedene Polyetherketone gelöst. Danach wurde Oleum (Gehalt 20 Gew.-% $SO_3$) zutitriert, bis ein sulfonierendes Gemisch erreicht wurde mit Schwefelsäurekonzentrationen von 98,5 bis 100 Gew.-% oder Oleumkonzentrationen von 0,1 bis 0,7 Gew.-% $SO_3$. Anschließend wurde die Mischung auf Reaktionstemperatur gebracht, um eine optimale und kontrollierte Sulfonierung zu gewährleisten. Nach Erreichen des gewünschten Sulfonierungsgrades wurde die Reaktion gestoppt und das Produkt isoliert. Die Charakterisierung des Produktes erfolgt mittels Viskosimetrie, $^{13}C$-NMR-Spektroskopie und Elementaranalyse.

Die Versuche in Tabelle 1 wurden mit einem Homopolymeren der allgemeinen Formel (III) durchgeführt. Die Polymere der Formel (III) besitzen einen S-Wert von 125 % und sind daher als mäßig sulfonierbar einzustufen.

Beispiele, die einen Sulfonierungsgrad der O-Phenylen-CO-Einheiten (SEK bezogen auf eine Wiederholungseinheit in mol%) von Null aufweisen sind als Vergleidhsbeispiele anzusehen.

In den Tabellen werden folgende Abkürzungen benutzt:

NR Versuchsnummer
LT Lösetemperatur in °C
LZ Lösezeit in Minuten
PK Polymerkonzentration in Gew.-%
RK Reaktionskonzentration von Oleum in Gew.- $SO_3$
RC Reaktionskonzentration von Schwefefelsäure in Gew.-% $H_2SO_4$
RT Reaktionstemperatur in □C (Sulfonierungstemperatur)
RZ Reaktionszeit in Minuten
SG Sulfonierungsgrad in mol-% bezogen auf eine Wiederholungseinheit
SEE Sulfonierungsgrad der O-Phenylen-O-Einheiten in mol-% bezogen auf eine Wiederholungseinheit
SEK Sulfonierungsgrad der O-Phenylen-CO-Einheiten in mol-% bezogen auf eine Wiederholungseinheit
IV inhärente Viskosität in dl/g (gemessen in konz. $H_2SO_4$ bei 25°C)

Tabelle 1: Homopolymer der Formel (III)

| Nr. | PK | LT | LZ | RC | RT | RZ | SG | SEE | SEK | IV |
|---|---|---|---|---|---|---|---|---|---|---|
| 1 | 6,7 | 60 | 60 | 98,5 | 80 | 0 | 32,3 | 31,0 | 1,3 | 0,86 |
| 2 | 6,7 | 60 | 60 | 98,5 | 80 | 30 | 53,1 | 47,8 | 5,3 | 0,84 |
| 3 | 6,7 | 60 | 60 | 98,5 | 80 | 60 | 71 | 62,9 | 8,1 | 0,84 |
| 4 | 6,7 | 60 | 60 | 98,5 | 80 | 90 | 82,7 | 73,4 | 9,3 | 0,80 |
| 5 | 6,7 | 60 | 60 | 98,5 | 80 | 120 | 88,5 | 49,3 | 9,2 | 0,80 |
| 6 | 6,7 | 60 | 60 | 98,5 | 80 | 150 | 94,0 | 83,9 | 10,1 | 0,76 |
| 7 | 6,7 | 60 | 60 | 98,5 | 80 | 210 | 100,6 | 90,0 | 10,6 | 0,73 |
| 8 | 6,7 | 60 | 60 | 98,5 | 80 | 240 | 102,1 | 92,1 | 10,0 | 0,72 |
| 9 | 6,7 | 60 | 60 | 98,5 | 60 | 0 | 29,0 | 29,0 | 0 | 0,87 |
| 10 | 6,7 | 60 | 60 | 98,5 | 60 | 30 | 33,7 | 33,7 | 0 | 0,87 |
| 11 | 6,7 | 60 | 60 | 98,5 | 60 | 60 | 38,8 | 38,8 | 0 | 0,86 |
| 12 | 6,7 | 60 | 60 | 98,5 | 60 | 90 | 42,3 | 42,3 | 0 | 0,84 |
| 13 | 6,7 | 60 | 60 | 98,5 | 60 | 120 | 44,9 | 44,9 | 0 | 0,81 |
| 14 | 6,7 | 60 | 60 | 98,5 | 60 | 150 | 48,2 | 48,2 | 0 | 0,79 |
| 15 | 6,7 | 60 | 60 | 98,5 | 60 | 210 | 53,1 | 53,1 | 0 | 0,77 |
| 16 | 6,7 | 60 | 60 | 98,5 | 60 | 240 | 55,8 | 54,8 | 1,0 | 0,72 |
| 17 | 6,7 | 60 | 60 | 98,5 | 90 | 0 | 20,5 | 20,5 | 0 | 0,83 |
| 18 | 6,7 | 60 | 60 | 98,5 | 90 | 30 | 33,1 | 30,8 | 2,3 | 0,82 |
| 19 | 6,7 | 60 | 60 | 98,5 | 90 | 60 | 48,0 | 43,2 | 4,8 | 0,79 |
| 20 | 6,7 | 60 | 60 | 98,5 | 90 | 90 | 58,4 | 51,6 | 6,8 | 0,74 |
| 21 | 6,7 | 60 | 60 | 98,5 | 90 | 120 | 66,7 | 58,1 | 8,6 | 0,70 |
| 22 | 6,7 | 60 | 60 | 98,5 | 90 | 150 | 74,6 | 65,0 | 9,6 | 0,65 |
| 23 | 6,7 | 60 | 60 | 98,5 | 90 | 210 | 85,7 | 73,9 | 11,8 | 0,61 |
| 24 | 6,7 | 60 | 60 | 98,5 | 90 | 240 | 90,0 | 77,0 | 13,0 | 0,59 |
| 25 | 6,7 | 60 | 60 | 98,5 | 100 | 0 | 19,5 | 19,5 | 0 | 0,80 |
| 26 | 6,7 | 60 | 60 | 98,5 | 100 | 30 | 43,4 | 39,1 | 4,3 | 0,78 |
| 27 | 6,7 | 60 | 60 | 98,5 | 100 | 60 | 74,3 | 64,7 | 9,6 | 0,74 |
| 28 | 6,7 | 60 | 60 | 98,5 | 100 | 90 | 87,7 | 72,8 | 14,9 | 0,71 |

(fortgesetzt)

| Nr. | PK | LT | LZ | RC | RT | RZ | SG | SEE | SEK | IV |
|---|---|---|---|---|---|---|---|---|---|---|
| 29 | 6,7 | 60 | 60 | 98,5 | 100 | 120 | 96,5 | 83,0 | 13,5 | 0,68 |
| 30 | 6,7 | 60 | 60 | 98,5 | 100 | 150 | 103,2 | 86,7 | 16,5 | 0,63 |
| 31 | 6,7 | 60 | 60 | 98,5 | 100 | 210 | 11,8 | 93,5 | 18,3 | 0,59 |
| 32 | 6,7 | 60 | 60 | 98,5 | 100 | 240 | 115,2 | 95,3 | 19,9 | 0,55 |
| 33 | 6,7 | 60 | 60 | 90,0 | 80 | 0 | 37,7 | 37,7 | 0 | 0,86 |
| 34 | 6,7 | 60 | 60 | 90,0 | 80 | 30 | 38,2 | 38,2 | 0 | 0,86 |
| 35 | 6,7 | 60 | 60 | 90,0 | 80 | 60 | 38,7 | 38,7 | 0 | 0,83 |
| 36 | 6,7 | 60 | 60 | 90,0 | 80 | 90 | 39,2 | 39,2 | 0 | 0,82 |
| 37 | 6,7 | 60 | 60 | 90,0 | 80 | 120 | 39,7 | 39,7 | 0 | 0,81 |
| 38 | 6,7 | 60 | 60 | 90,0 | 80 | 150 | 41,6 | 41,6 | 0 | 0,79 |
| 39 | 6,7 | 60 | 60 | 90,0 | 80 | 210 | 44,3 | 44,3 | 0 | 0,76 |
| 40 | 6,7 | 60 | 60 | 90,0 | 80 | 240 | 45,7 | 45,7 | 0 | 0,75 |
| 41 | 6,7 | 60 | 60 | 99,0 | 80 | 0 | 30,4 | 29,4 | 1,0 | 0,85 |
| 42 | 6,7 | 60 | 60 | 99,0 | 80 | 30 | 48,2 | 43,3 | 4,9 | 0,84 |
| 43 | 6,7 | 60 | 60 | 99,0 | 80 | 60 | 68,3 | 59,9 | 8,4 | 0,81 |
| 44 | 6,7 | 60 | 60 | 99,0 | 80 | 90 | 82,0 | 73,9 | 8,1 | 0,79 |
| 45 | 6,7 | 60 | 60 | 99,0 | 80 | 120 | 88,9 | 76,1 | 12,8 | 0,77 |
| 46 | 6,7 | 60 | 60 | 99,0 | 80 | 150 | 93,9 | 83,0 | 10,9 | 0,73 |
| 47 | 6,7 | 60 | 60 | 99,0 | 80 | 210 | 99,5 | 84,6 | 14,9 | 0,70 |
| 48 | 6,7 | 60 | 60 | 99,0 | 80 | 240 | 101,8 | 86,5 | 15,3 | 0,68 |
| 49 | 6,7 | 60 | 60 | 95,2 | 80 | 0 | 25,4 | 25,4 | 0 | 0,85 |
| 50 | 6,7 | 60 | 60 | 95,2 | 80 | 30 | 29,4 | 29,4 | 0 | 0,85 |
| 51 | 6,7 | 60 | 60 | 95,2 | 80 | 60 | 32,8 | 32,8 | 0 | 0,85 |
| 52 | 6,7 | 60 | 60 | 95,2 | 80 | 90 | 35,4 | 35,4 | 0 | 0,84 |
| 53 | 6,7 | 60 | 60 | 95,2 | 80 | 120 | 38,2 | 38,2 | 0 | 0,84 |
| 54 | 6,7 | 60 | 60 | 95,2 | 80 | 150 | 41,0 | 41 | 0 | 0,80 |
| 55 | 6,7 | 60 | 60 | 95,2 | 80 | 210 | 45,1 | 46,1 | 0 | 0,78 |
| 56 | 6,7 | 60 | 60 | 95,2 | 80 | 240 | 48,4 | 48,4 | 0 | 0,76 |

Tabelle 2:

| Homopolymere der Formel (V) | | | | | | | | | | |
|---|---|---|---|---|---|---|---|---|---|---|
| Nr. | PK | LT | LZ | RK | RT | RZ | SEE | SEK | SG | IV |
| 1 | 6,7 | 50 | 60 | 0,4 | 60 | 0 | 0 | 2,3 | 2,3 | 0,92 |
| 2 | 6,7 | 50 | 60 | 0,4 | 60 | 30 | 0 | 8,7 | 8,7 | 0,91 |
| 3 | 6,7 | 50 | 60 | 0,4 | 60 | 60 | 0 | 14,0 | 14,0 | 0,88 |
| 4 | 6,7 | 50 | 60 | 0,4 | 60 | 90 | 0 | 17,2 | 17,2 | 0,84 |
| 5 | 6,7 | 50 | 60 | 0,4 | 60 | 120 | 0 | 20,2 | 20,2 | 0,85 |
| 6 | 6,7 | 50 | 60 | 0,4 | 60 | 15 | 0 | 23,5 | 23,5 | 0,81 |

(fortgesetzt)

| Homopolymere der Formel (V) | | | | | | | | | | |
|---|---|---|---|---|---|---|---|---|---|---|
| Nr. | PK | LT | LZ | RK | RT | RZ | SEE | SEK | SG | IV |
| 7 | 6,7 | 50 | 60 | 0,7 | 50 | 0 | 0 | 3,7 | 3,7 | 1,00 |
| 8 | 6,7 | 50 | 60 | 0,7 | 50 | 30 | 0 | 7,0 | 7,0 | 0,97 |
| 9 | 6,7 | 50 | 60 | 0,7 | 50 | 60 | 0 | 11,1 | 11,1 | 0,92 |
| 10 | 6,7 | 50 | 60 | 0,7 | 50 | 120 | 0 | 17,8 | 17,8 | 0,90 |
| 11 | 6,7 | 50 | 60 | 0,7 | 50 | 180 | 0 | 22,1 | 22,1 | 0,88 |
| 12 | 6,7 | 50 | 60 | 0,7 | 50 | 240 | 0 | 26,0 | 26,0 | 0,85 |
| 13 | 6,7 | 50 | 60 | 0,7 | 50 | 360 | 0 | 31,5 | 31,5 | 0,82 |
| 14 | 6,7 | 50 | 60 | 0,7 | 50 | 460 | 0 | 38,2 | 38,2 | 0,75 |
| 15 | 6,7 | 50 | 60 | 0,7 | 50 | 525 | 0 | 41,0 | 41,0 | 0,73 |
| 16 | 6,7 | 50 | 60 | 0,7 | 70 | 0 | 0 | 2,7 | 2,7 | 0,95 |
| 17 | 6,7 | 50 | 60 | 0,7 | 70 | 60 | 0 | 40,2 | 40,2 | 0,78 |
| 18 | 6,7 | 50 | 60 | 0,7 | 70 | 120 | 0 | 62,3 | 62,3 | 0,72 |
| 19 | 6,7 | 50 | 60 | 0,7 | 70 | 180 | 0 | 75,2 | 75,2 | 0,61 |
| 20 | 6,7 | 50 | 60 | 0,7 | 70 | 240 | 0 | 84,2 | 84,2 | 0,59 |
| 21 | 6,7 | 50 | 60 | 0,7 | 70 | 320 | 0 | 92,0 | 92,0 | 0,56 |
| 22 | 6,7 | 50 | 60 | 0,1 | 50 | 0 | 0 | 1,2 | 1,2 | 1,03 |
| 23 | 6,7 | 50 | 60 | 0,1 | 50 | 60 | 0 | 2,1 | 2,1 | 0,98 |
| 24 | 6,7 | 50 | 60 | 0,1 | 50 | 120 | 0 | 4,1 | 4,1 | 0,93 |
| 25 | 6,7 | 50 | 60 | 0,1 | 50 | 180 | 0 | 5,7 | 5,7 | 0,90 |
| 26 | 6,7 | 50 | 60 | 0,1 | 50 | 240 | 0 | 7,3 | 7,3 | 0,88 |
| 27 | 6,7 | 50 | 60 | 0,1 | 50 | 300 | 0 | 9,1 | 9,1 | 0,89 |
| 28 | 6,7 | 50 | 60 | 0,1 | 50 | 435 | 0 | 12,9 | 12,9 | 0,85 |
| 29 | 6,7 | 50 | 60 | 0,1 | 70 | 0 | 0 | 2,5 | 2,5 | 0,90 |
| 30 | 6,7 | 50 | 60 | 0,1 | 70 | 30 | 0 | 14,9 | 14,9 | 0,88 |
| 31 | 6,7 | 50 | 60 | 0,1 | 70 | 60 | 0 | 17,7 | 17,7 | 0,86 |
| 32 | 6,7 | 50 | 60 | 0,1 | 70 | 120 | 0 | 21,2 | 21,2 | 0,83 |
| 33 | 6,7 | 50 | 60 | 0,1 | 70 | 180 | 0 | 23,4 | 23,4 | 0,78 |
| 34 | 6,7 | 50 | 60 | 0,1 | 70 | 330 | 0 | 31,9 | 31,9 | 0,73 |
| 35 | 6,7 | 50 | 60 | 0,1 | 70 | 390 | 0 | 35,2 | 35,2 | 0,71 |

## Patentansprüche

**1.** Verwendung eines sulfonierten aromatischen Polyetherketon-Homopolymeren aus Einheiten der allgemeinen Formel (V)

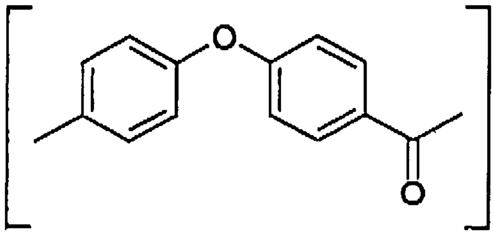

(V)

und bei dem 1 % bis 100 % der O-Phenylen-CO-Einheiten mit einer SO3M-Gruppe substituiert sind und M, unter Berücksichtigung der ionischen Wertigkeiten, für eines oder mehrere Elemente ausgewählt aus der Gruppe H, $NR_4$, mit R= H, $C_1$-$C_4$-Alkyl, oder ein Metall, bevorzugt ein Alkali- oder Erdalkalimetall oder ein Metall der 8. Nebengruppe steht, als Polymerelektrolyt in Brennstoffzellen.

2. Verwendung nach Anspruch 1, **dadurch gekennzeichnet, dass** das sulfonierte aromatische Polyetherketon-Homopolymere neben den Einheiten der Formel (V) auch aus Einheiten der Formel (VI)

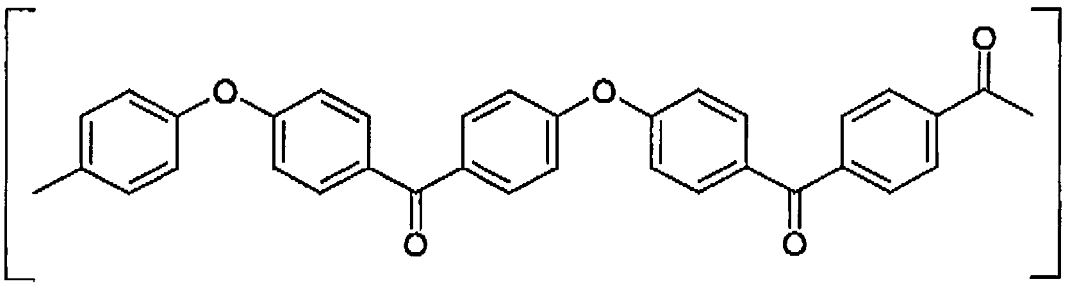

(VI)

besteht.

3. Verwendung nach Anspruch 2, **dadurch gekennzeichnet, dass** das sulfonierte aromatische Polyetherketon-Homopolymeren als Polymerelektrolyt in Form einer asymmetrische Membran eingesetzt wird.

4. Verwendung nach Anspruch 2, **dadurch gekennzeichnet, dass** das sulfonierte aromatische Polyetherketon-Homopolymeren als Polymerelektrolyt in Form eines dichten Films eingesetzt wird.

5. Verwendung nach Anspruch 2, **dadurch gekennzeichnet, dass** das sulfonierte aromatische Polyetherketon-Homopolymere als Polymerelektrolyt zur Erreichung eines besonders intensiven Kontaktes zwischen zwei Polymerelektrolytoberflächen eingesetzt wird.

6. Verwendung nach Anspruch 4, **dadurch gekennzeichnet, dass** die Dicke der Filme zwischen 5μm und 1mm beträgt.

**Claims**

1. Use of a sulphonated aromatic polyether ketone homopolymers from moieties of the general formula (V)

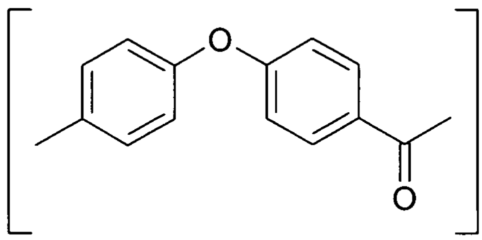

(V)

and in which 1% to 100% of the O-phenylene-CO moieties are substituted with a $SO_3M$ group and M is one or more elements selected from the group of H, $NR_4$, with R = H, $C_1$-$C_4$ alkyl, or a metal, preferably an alkaline or alkaline earth metal or a metal of subgroup 8, taking into consideration the ionic valences, as polymer electrolyte in fuel cells.

2. The use according to claim 1, **characterized in that** the sulphonated aromatic polyether ketone homopolymer consists also of moieties of the formula (VI)

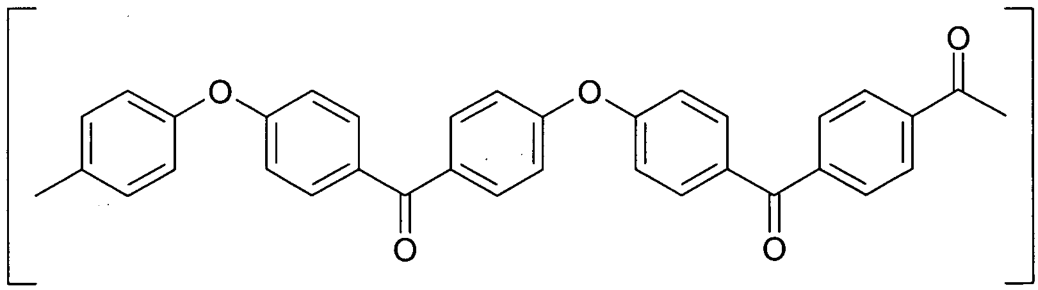

(VI)

in addition to the moieties of the formula (V).

3. The use according to claim 2, **characterized in that** the sulphonated aromatic polyether ketone homopolymer as polymer electrolyte is used in the form of an asymmetrical membrane.

4. The use according to claim 2, **characterized in that** the sulphonated aromatic polyether ketone homopolymer as polymer electrolyte is used in the form of a dense film.

5. The use according to claim 2, **characterized in that** the sulphonated aromatic polyether ketone homopolymer as polymer electrolyte is used to achieve an especially intensive contact between two polymer electrolyte surfaces.

6. The use according to claim 4, **characterized in that** the thickness of the films is between 5 μm and 1 mm.

**Revendications**

1. Utilisation d'une cétone polyéther-homopolymère aromatique sulfoné dans les piles à combustible à membrane électrolyte polymère, constituée d'unités de la formule générale (V),

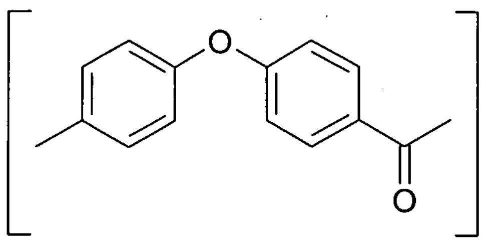

(V)

où entre 1 et 100% des unités o-phénylène-co sont substituées avec un groupe S03M- et M représente un ou plusieurs éléments soigneusement choisis en fonction des valences ioniques dans le groupe suivant: H, NR4, où R représente H, alkyle C1-C4 ou un métal, de préférence un métal alcalin ou alcalino-terreux ou encore un métal du groupe secondaire 8.

**2.** Utilisation selon revendication 1, **caractérisée en ce que** la cétone polyéther-homopolymère aromatique sulfonée est composée à côté des unités de la formule (V),

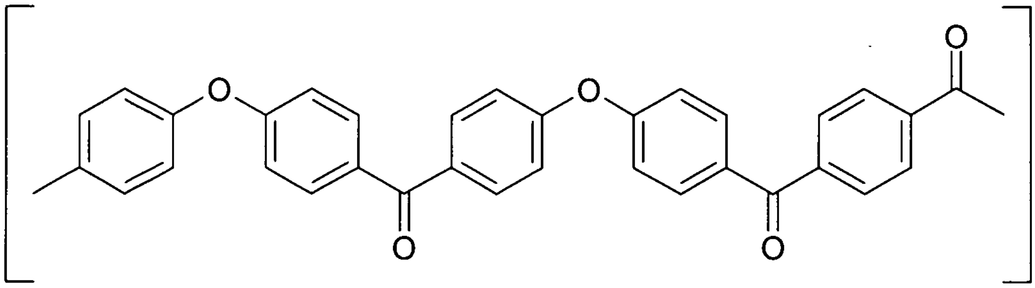

(VI)

par des unités de la formule (VI).

**3.** Utilisation selon revendication 2, **caractérisée en ce que** la cétone polyéther-homopolymère aromatique sulfonée est utilisée comme électrolyte polymère sous forme d'une membrane asymétrique.

**4.** Utilisation selon revendication 2, **caractérisée en ce que** la cétone polyéthér-homopolymère aromatique sulfonée est utilisée comme électrolyte polymère sous forme d'un film dense.

**5.** Utilisation selon revendication 2, **caractérisée en ce que** la cétone polyéther-homopolymère aromatique sulfonée est utilisée comme électrolyte polymère pour atteindre un contact particulièrement intensif, entre deux surfaces électrolytes polymères.

**6.** Utilisation selon revendication 4, **caractérisée en ce que** l'épaisseur du film est située entre 5 µm et 1 mm.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3065205 A
- GB 971227 A
- US 3441538 A
- GB 1387303 A
- WO 8403891 A
- GB 1177183 A
- GB 1141421 A
- EP 0001879 A
- US 4108837 A
- US 4175175 A
- EP 008895 A
- EP 041780 A
- EP 575807 A


### In der Beschreibung aufgeführte Nicht-Patentliteratur


- **IWAKURA, Y. ; UNO, K. ; TAHIGUCHI, T.J.** *Polym. Sci., Pat. A-1,* 1968, vol. 6, 3345
- **R.A., CLENDINNING ; A.G. FARNHAM ; W.F. HALL ; R.N. JOHNSON ; C.N. MERRIAM.** *J. Polym. Sci. A1,* 1967, vol. 5, 2375
- **T.E. ATTWOOD ; A.B. NEWTON ; J.B. ROSE.** *Br. Polym. Journ.,* 1972, vol. 4, 391
- **T.E. ATTWOOD ; P.C. DAWSON ; J.L. FREEMANN ; L.R.J. HOY ; J.B. ROSE ; P.A. STANILAND.** *Polymer,* 1981, vol. 22, 1096
- **DAOUST et al.** *Polymer,* 1994, vol. 35 (25), 5491-5497
- **MARVEL et al.** *Journal of Polymer Science, Polymer Chem.,* 1985, vol. 23, 2205-2223
- **BISHOP et al.** *Macromolecules,* 1985, vol. 18, 86-93